**Europäisches Patentamt**

**European Patent Office**

**Office européen des brevets**

(19)

(11) Veröffentlichungsnummer : **0 239 057 B1**

(12) # EUROPÄISCHE PATENTSCHRIFT

(45) Veröffentlichungstag der Patentschrift :
08.05.91 Patentblatt 91/19

(51) Int. Cl.⁵ : **E04F 13/04, E04B 1/80**

(21) Anmeldenummer : **87104265.1**

(22) Anmeldetag : **23.03.87**

(54) Verfahren zum Herstellen eines Bauelements aus Kunststoff-Hartschaum und nach diesem Verfahren hergestelltes Bauelement.

(30) Priorität : 25.03.86 DE 3610012

(43) Veröffentlichungstag der Anmeldung :
30.09.87 Patentblatt 87/40

(45) Bekanntmachung des Hinweises auf die
Patenterteilung :
08.05.91 Patentblatt 91/19

(84) Benannte Vertragsstaaten :
AT BE CH DE ES FR GB IT LI LU NL SE

(56) Entgegenhaltungen :
CH-A- 490 584
CH-A- 618 759
DE-A- 3 407 184
DE-U- 7 621 177

(73) Patentinhaber : Günthner, Otto
Steig 10/1
W-7210 Rottweil (DE)

(72) Erfinder : Günthner, Otto
Steig 10/1
W-7210 Rottweil (DE)

(74) Vertreter : Patentanwälte Dipl.-Ing. Klaus
Westphal Dr. rer. nat. Bernd Mussgnug Dr.
rer.nat. Otto Buchner
Waldstrasse 33
W-7730 VS-Villingen-Schwenningen (DE)

## Beschreibung

Die Erfindung betrifft ein Verfahren zum Herstellen eines Bauelements aus Kunststoff-Hartschaum, insbesondere aus geschäumtem Polystyrol, gemäß dem Oberbegriff des Patentanspruchs 1 und ein nach diesem Verfahren hergestelltes Bauelement.

Bauelemente aus geschäumtem Polystyrol werden als Isolierelemente zur Wärmedämmung eingesetzt. Die Bauelemente werden entweder als Platten an der Außenfassade des Gebäudes angebracht oder dienen in Form von aufeinandersetzbaren Hohlblöcken als Schalung, die mit Beton ausgegossen wird. Die aus Kunststoff-Hartschaum bestehenden Bauelemente bringen Probleme beim Verputzen mit sich, weil die üblichen mineralischen Putze und Kunststoff-Putze an der Oberfläche der Bauelemente nicht oder nur schlecht haften. Um eine bessere Haftung des Putzes zu erreichen, ist es z.B. aus der CH-PS 490 584 bekannt, in der Oberfläche sich kreuzende Nuten vorzusehen, die vorzugsweise schwalbenschwanzförmig hinterschnitten sind. Gemäß dem DE-GM 76 21 177 ist es weiter bekannt, die schwalbenschwanzförmig hinterschnittenen, sich kreuzenden Nuten schräg zu den Kanten des Bauelements anzuordnen. Der aufgetragene Putz verankert sich in den hinterschnittenen Nuten, die in Form eines Gitters die Oberfläche des Bauelements überziehen, so daß sich ein besseres Haften des Putzes ergibt. Es ist bekannt, Nuten oder sonstige Vertiefungen in der Oberfläche von Bauelementen aus geschäumtem Polystyrol beim Formschäumen (vgl. z.B. DE-A 34 07 184) oder durch Schneiden, Fräsen oder Heizdrahtbehandlung herzustellen. Diese Herstellungsverfahren sind aufwendig.

Der Erfindung liegt die Aufgabe zugrunde, ein Verfahren zum Herstellen eines Bauelements aus Kunststoff-Hartschaum, insbesondere aus geschäumtem Polystyrol, mit sich kreuzenden Nuten zu schaffen, das preisgünstig ist und eine gute Haftung des unmittelbar aufgetragenen Putzes gewährleistet.

Diese Aufgabe wird bei einem Verfahren der eingangs genannten Gattung erfindungsgemäß gelöst durch die Merkmale des kennzeichnenden Teils des Patentanspruchs 1.

Ein nach diesem Verfahren hergestelltes Bauelement ist durch die Merkmale des Patentanspruchs 5 gekennzeichnet. Vorteilhafte Ausführungsformen der Erfindung sind in den Unteransprüchen angegeben.

Erfindungsgemäß wird in die äußere zu verputzende Oberfläche des Bauelements ein verhältnismäßig engmaschiges Netz von sich kreuzenden Nuten eingedrückt. Beim Eindrücken der schmalen Nuten, die vorzugsweise nur eine Breite von etwa 1,5 bis 2 mm aufweisen, wird die geschäumte Oberfläche des Bauelements aufgerissen. Die Kunststoff-Schaumblasen werden beim Eindrücken der Nuten aus ihrem Verband in der Oberfläche herausgebrochen und nach innen gedrückt. Dadurch ergibt sich ein unregelmäßiger Verlauf der Kanten der Nuten und die Nuten sind je nach der Form der Kunststoff-Schaumblasen teilweise auch hinterschnitten. Die unregelmäßige Form der Nuten und das Aufreißen der Oberfläche wird inbesondere dadurch begünstigt, daß die Nuten mit sägezahnförmigen Schneiden eingedrückt werden. Die Sägezähne der Schneiden bewirken ein unregelmäßiges Tiefenprofil der Nuten und begünstigen das Herausreißen der einzelnen Kunststoff-Schaumblasen aus dem Verband der ebenen Oberfläche. Der unregelmäßige Verlauf der Nuten, ihre wechselnde Tiefe und die teilweise Hinterschneidung führt in Verbindung mit dem engmaschigen Netz der Nuten zu einer intensiven Verzahnung des aufgebrachten Putzes mit der Oberfläche des Bauelements, so daß sich eine gute formschlüssige Haftung der Putzschicht an der Oberfläche des Bauelements ergibt.

Das Eindrücken der Nuten in die Hartschaum-Oberfläche führt im Bereich der Nuten zu einer Quetschung des Kunststoffschaumes, die ein Erweichen des Hartschaumes in dem gequetschten Bereich zur Folge hat. Diese Erweichung bewirkt eine Verbesserung der Schalldämmung des Bauelements, die sich insbesondere in der für die Schallübertragung wichtigen Oberflächenschicht auswirkt.

Das Aufreißen der Oberfläche durch das Netz der Nuten hat schließlich zur Folge, daß die einzelnen, zwischen den Nuten stehenbleibenden Oberflächenbereiche geringfügig in der Oberflächenebene elastisch gegeneinander verschiebbar sind. Durch das Erweichen des Kunststoffschaumes im Bereich der eingedrückten Nuten ist der Elastizitätsmodul für die gegenseitige elastische Verschiebung der einzelnen Oberflächenbereiche gegenüber dem Elastizitätsmodul der ursprünglich durchgehend geschlossenen Oberfläche stark verringert. Diese Verringerung des Elastizitätsmoduls wirkt der Entstehung von Putzrissen im Bereich der Stoßfugen der Bauelemente infolge von thermischen Spannungen entgegen, wie sie bei starken Temperaturschwankungen zwischen Tag und Nacht und bei Sonneneinstrahlung auftreten.

Da der Putz im allgemeinen im wesentlichen in der Richtung der Kanten der Bauelemente aufgetragen wird, hat die Anordnung der Nuten schräg zu den Kanten des Bauelements den Vorteil, daß der Putz beim Auftragen leicht in die Nuten eindringen kann, ohne daß Luftpolster in den Nuten gefangen werden.

Außer den sehr guten Eigenschaften des Bauelements bezüglich der Putzhaftung ist das Herstellungsverfahren auch äußerst kostengünstig. Die Bauelemente werden zunächst mit glatter Außenoberfläche geschäumt, so daß das Formschäumen der Bauelemente und die hierzu erforderlichen Formen sehr einfach sind. Anschließend werden die Nuten in die Oberfläche eingedrückt, was ebenfalls in einem einfachen Arbeitsvorgang mit einfachen Werkzeugen möglich ist. Die gezahnten Schneiden können z.B. als gerade Schneidkanten eines Stempels ausgebildet sein. Vorzugsweise wird ein Stempel mit einer Schar von parallelen Schneiden verwendet, die zweimal in unterschiedlicher Winkelstellung in die Oberfläche eingedrückt werden, um das Netz der Nuten zu erzeugen. Ebenso ist es möglich, die Nuten mit einer oder mehreren parallel nebeneinander angeordneten Kreisscheiben einzudrücken, die eine gezahnte Umfangsschneide aufweisen und unter Druck über die Oberfläche des Bauelementsrollen. Die Kreisscheiben können über das Bauelement hinweggeführt werden oder das Bauelement kann unter den Kreisscheiben hindurchlaufen. Das Eindrücken der Nuten mittels Kreisscheiben ist insbesondere für großflächige Bauelemente vorteilhaft.

Das Bauelement eignet sich in gleicher Weise für einen mineralischen Putz wie für einen Kunststoffputz.

Im folgenden wird die Erfindung anhand eines in der Zeichnung dargestellten Ausführungsbeispiels näher erläutert. Es zeigen

 Figur 1 – einen Schnitt durch einen Teil eines erfindungsgemäß hergestellten Bauelements,
 Figur 2 – eine Draufsicht auf einen Teil des Bauelements,
 Figur 3 – einen Schnitt durch eine Nut in vergrößertem Maßstab und
 Figur 4 – eine Draufsicht auf eine Nut in vergrößertem Maßstab.

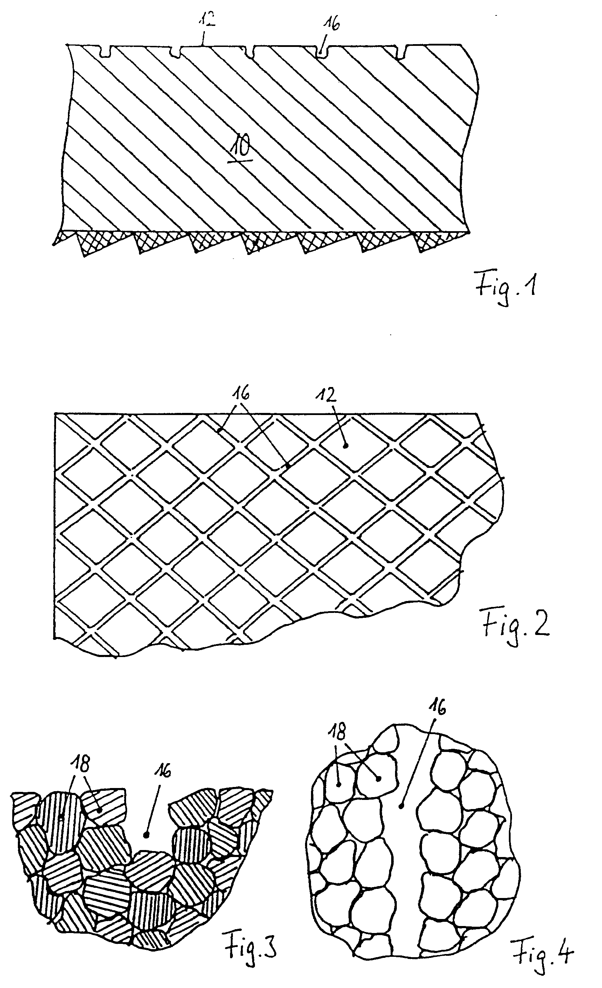

In den Figuren 1 und 2 ist ein Ausschnitt aus einem Bauelement aus geschäumtem Polystyrol dargestellt. Es kann sich um einen Ausschnitt aus einer Isolierplatte oder um einen Ausschnitt aus der äußeren Wand eines hohlen Schalsteines handeln.

Das Bauelement 10 wird mit glatter ebener äußerer Oberfläche in einer entsprechenden Form geschäumt.

Nach dem Entformen des geschäumten Bauelements werden in die ebene äußere Oberfläche 12, auf die der Putz aufgebracht werden soll, Nuten 16 eingedrückt. Es sind zwei Scharen von zueinander parallel verlaufenden Nuten 16 vorgesehen, die sich unter einem spitzen Winkel kreuzen, so daß die Nuten 16 ein Netz von Rauten bilden. Die Nuten verlaufen unter einem Winkel von etwa 30° zu den Längskanten des Bauelements 10.

Zum Eindrücken der Nuten 16 dient ein Stempel mit parallelen Schneiden. Es wird zunächst eine Schar von parallelen Nuten 16 mittels dieser Schneiden in die Oberfläche 12 eingedrückt und dann nach einem Drehen des Bauelements 10 die zweite kreuzende Schar von Nuten 16, Die in die Oberfläche 12 eindringenden Kanten der Schneiden sind sägezahnförmig gezahnt, so daß die Nuten 16 in ihrer Längsrichtung ein etwa sägezahnförmig wechselndes Tiefenprofil aufweisen.

Das Bauelement 10 wird während des Eindrückens der Nuten 16 auf einer Gegendruckplatte abgestützt. Ist das Bauelement eine Isolierplatte, handelt es sich um eine ebene Gegendruckplatte. Ist das Bauelement ein hohler Schalstein, so ist die Gegendruckplatte an einem in den Hohlraum des Schalsteins eingeführten Kern ausgebildet.

Beim Eindrücken der Nuten 16 wird der Polystyrol-Hartschaum in der unmittelbaren Umgebung der Nuten 16 gequescht und erweicht, so daß auch in der Umgebung der Nuten sich schalldämmende Bereiche ausbilden.

In den Figuren 3 und 4 ist ein Auschnitt einer Nut 16 in stark vergrößerterm Maßstab dargestellt. Es ist zu erkennen, wie durch das Eindrücken der Nuten 16 die Polystyrol-Schaumblasen 18 im Bereich der Nuten aus dem Verband der Oberfläche 12 herausgebrochen werden. Dadurch ergibt sich ein unregelmäßiger Kantenverlauf der Nuten 16, wie Fig. 4 zeigt. Das Ausbrechen und Eindrükken einzelner Schaumblasen führt auch zu einem unregelmäßigen Querschnittsprofil der Nuten 16 mit einzelnen Hinterschneidungen, wie in Fig. 3 zu erkennen ist. Der unregelmäßige Verlauf der Nuten 16 und ihres Querschnittprofils führt zu einer guten formschlüssigen Verzahnung des aufgebrachten Putzes mit dem Bauelement 10.

In einer bevorzugten Ausführungsform weisen die parallel zueinander verlaufenden Nuten einen gegenseitigen Abstand von 15 mm auf. Die Breite der Nuten 16 beträgt etwa 1,5 mm und die Tiefe der Nuten 16 schwankt zwischen 1,5 und 6 mm.

## Ansprüche

1. Verfahren zum Herstellen eines Bauelementes (10) aus Kunststoff-Hartschaum, insbesondere aus geschäumtem Polystyrol, mit an seiner äußeren Oberfläche (12) ausgebildeten sich kreuzenden Nuten (16), dadurch gekennzeichnet, daß die Nuten mittels gezahnter Schneiden in die ebene äußere Oberfläche des geschäumten Bauelements eingedrückt werden.

2. Verfahren nach Anspruch 1, dadurch gekennzeichnet, daß die Nuten (16) mittels eines Stempels mit einer oder mehreren parallelen Schneiden eingedrückt werden.

3. Verfahren nach Anspruch 1, dadurch gekennzeichnet, daß die Nuten (16) mittels einer oder mehreren parallelen Kreisscheiben mit gezahnten Umfangsschneiden eingedrückt werden.

4. Verfahren nach Anspruch 1, dadurch gekennzeichnet, daß die zwei Scharen von jeweils zueinander parallelen Nuten (16) nacheinander eingedrückt werden.

5. Bauelement aus Kunststoff-Hartschaum, insbesondere aus geschäumtem Polystyrol, mit an seiner äußeren Oberfläche (12) ausgebildeten sich kreuzenden vorzugsweise schräg zu den Kanten des Bauelements verlaufenden Nuten (16), dadurch gekennzeichnet, daß die Nuten (16) mit einem unregelmäßigen, insbesondere gezahnten Tiefenprofil in die Oberfläche (12) eingedrückt sind.

6. Bauelement nach Anspruch 5, dadurch gekennzeichnet, daß die jeweils zueinander parallel verlaufenden Nuten (16) einen gegenseitigen Abstand von ca. 1 cm bis 4 cm; vorzugsweise von ca. 1,5 cm bis 2 cm, aufweisen.

7. Bauelement nach einem der Ansprüche 5 oder 6, dadurch gekennzeichnet, daß die Nuten (16) eine Breite von ca. 1,5 mm bis 2 mm aufweisen.

8. Bauelement nach Anspruch 7, dadurch gekennzeichnet, daß die Nuten (16) eine Tiefe von ca. 1,5 mm bis 6 mm aufweisen.

## Claims

1. A method of producing a structural element (10) from rigid expanded plastics, more particularly foamed polystyrene, whose outer surface (12) is formed with intersecting grooves (16), characterized in that the grooves are impressed in the flat outer surface of the foamed structural element by means of serrated cutting edges.

2. A method according to claim 1, characterized in that the grooves (16) are impressed by means of a punch having one or more parallel cutting edges.

3. A method according to claim 1, characterized in that the grooves (16) are impressed by means of one or more parallel circular discs having serrated peripheral cutting edges.

4. A method according to claim 1, characterized in that two groups of parallel grooves (16) are impressed successively.

5. A structural element of rigid expanded plastics, more particularly foamed polyester, whose outer surface (12) is formed with intersecting grooves (16) preferably extending at an angle to the edges of the structural element, characterized in that the grooves (16) are impressed in the surface (12) with an irregular, more particularly serrated section in depth.

6. A structural element according to claim 5, characterized in that the parallel grooves (16) are spaced out by approximately 1 cm to 4 cm, preferably by approximately 1.5 cm to 2 cm.

7. A structural element according to claims 5 or 6, characterized in that the grooves (16) have a width of approximately 1.5 mm to 2 mm.

8. A structural element according to claim 7, characterized in that the grooves (16) have a depth of approximately 1.5 mm to 6 mm.

## Revendications

1. Procédé pour la production d'un élément de construction (10) en mousse dure de matière plastique, en particulier de polystyrène cellulaire en mousse, comprenant des rainures réalisées sur sa surface extérieure (12) et se croisant, caractérisé en ce que les rainures sont imprimées sur la surface extérieure plane de l'élément de construction au moyen de lames dentées.

2. Procédé selon la revendication 1, caractérisé en ce que les rainures (16) sont imprimées au moyen d'un poinçon à une ou plusieurs lames parallèles.

3. Procédé selon la revendication 1, caractérisé en ce que les rainures (16) sont imprimées au moyen d'un ou plusieurs disques circulaires comportant des lames périphériques dentées.

4. Procédé selon la revendication 2, caractérisé en ce que les deux familles de rainures (16) respectivement parallèles les unes par rapport aux autres, sont imprimées l'une après l'autre.

5. Elément de construction en mousse dure de matière plastique, en particulier en polystyrène cellulaire en mousse, comprenant des rainures (16) réalisées à sa surface extérieure (12), se développant en oblique par rapport aux bords de l'élément de construction et de préférence se croisant, caractérisé en ce que les rainures (16) sont imprimées dans la surface (12) avec un profil en profondeur irrégulier, en particulier avec des dents.

6. Elément de construction selon la revendication 5, caractérisé en ce que les rainures (16) se développant respectivement parallèlement les unes aux autres, comportent une distance réciproque d'environ 1cm à 4cm, de préférence d'environ 1,5 cm à 2 cm.

7. Elément de construction selon une des revendications 5 ou 6, caractérisé en ce que les rainures (16) comportent une largeur d'environ 1,5 mm à 2 mm.

8. Elément de construction selon la revendication 7, caractérisé en ce que les rainures (16) comportent une profondeur d'environ 1,5 mm à 6 mm.

Fig.1

Fig.2

Fig.3

Fig.4